# FASCICULE DE BREVET EUROPEEN

(11) **EP 0 637 849 B1**
(45) Date de publication et mention de la délivrance du brevet: **22.05.1996**
(21) Numéro de dépôt: 94410059.3
(22) Date de dépôt: 02.08.1994
(51) Int. Cl.: H01M 2/10

(54) **Boîtier pour piles ou accumulateurs électriques**
Behälter für elektrische Batterien oder Akkumulatoren
Case for electrical batteries or accumulators

(30) Priorité: 03.08.1993 FR 9309652
(43) Date de publication de la demande: 08.02.1995
(73) Titulaire: ZEDEL, F-38920 Crolles (FR)
(72) Inventeur: Petzl, Paul, F-38530 Barraux (FR)
(74) Mandataire: Hecké, Gérard

(56) Documents cités:
- US-A- 2 308 270
- US-A- 4 593 461
- PATENT ABSTRACTS OF JAPAN vol. 9, no. 173 (E-329) (1896) 18 Juillet 1985 & JP-A-60 044 957 (MATSUSHITA DENKI SANGYO K.K.) 11 Mars 1985
- PATENT ABSTRACTS OF JAPAN vol. 15, no. 36 (E-102) 29 Janvier 1991 & JP-A-02 274 128 (FUJITSU LTD) 8 Novembre 1990
- PATENT ABSTRACTS OF JAPAN vol. 9, no. 65 (E-304) (1788) 26 Mars 1985 & JP-A-59 203 364 (SANYO DENKI K.K.) 17 Novembre 1984

## Description

L'invention est relative à un boîtier pour le logement d'éléments électriques d'une source de tension d'alimentation, notamment des piles ou des accumulateurs, et comprenant un carter creux renfermant un moyen de support des éléments électriques, un couvercle d'obturation du carter, et un circuit électrique d'interconnexion à un câble traversant un orifice du carter pour l'alimentation d'un récepteur extérieur.

Dans les boîtiers connus du genre mentionné, il est classique, après la mise en place des piles, de procéder au raccordement électrique des piles avec le câble, avant d'obturer le boîtier par la mise en place du couvercle.

Il est également connu d'introduire des piles dans des logements d'un carter fixe, et d'obturer ensuite le boîtier suite à l'insertion par coulissement d'un couvercle de fermeture dans des rainures du carter.

L'objet de l'invention consiste à améliorer les opérations d'installation ou de remplacement des piles dans un boîtier d'alimentation en énergie électrique.

Le boîtier selon l'invention est caractérisé en ce que :
- un moyen de support des éléments électriques est rendu solidaire du couvercle pour former un module en forme de cartouche extractible,
- un premier circuit de contacts relie entre eux les éléments électriques au voisinage du couvercle,
- un deuxième circuit de contacts est disposé en regard du premier circuit au fond du carter,
- et des moyens de serrage du couvercle sur le carter comportent une paire de pinces, articulées de manière symétrique sur les faces latérales opposées du carter, chaque pince comprenant une surface d'accrochage susceptible de coopérer avec un organe de retenue disposé à chaque extrémité du couvercle de manière à engendrer à la fois une répartition uniforme de la pression de contact sur la totalité des éléments électriques, notamment des piles, et une étanchéité au niveau de l'interface d'assemblage du couvercle et du bord supérieur du carter.

Selon un premier mode de réalisation, utilisant un boîtier à piles, le moyen de support amovible est formé par un tiroir ayant des compartiments adjacents de positionnement et de maintien des piles.

Selon un deuxième mode de réalisation utilisant un boîtier à accumulateurs, les accumulateurs sont solidarisés mécaniquement entre eux pour former un ensemble monobloc fixé directement au couvercle, la liaison électrique des accumulateurs étant réalisée par soudage de barrettes de connexion.

D'autres avantages et caractéristiques ressortiront plus clairement de la description qui va suivre d'un mode de mise en oeuvre de l'invention, donné à titre d'exemple non limitatif, et représenté aux dessins annexés, dans lesquels:
- la figure 1 est une vue en perspective du boîtier selon l'invention, après retrait total du module de support des piles, la paroi du carter étant partiellement arrachée pour montrer l'intérieur ;
- la figure 2 montre une vue identique à la figure 1 au début de la course d'insertion du module dans le carter ;
- la figure 3 est une vue identique à la figure 1 après que le module vienne en butée contre les contacts agencés au fond du carter, et que les pinces se trouvent en position inactive ;
- les figures 4 et 5 représentent des vues identiques à la figure 1 respectivement au début et à la fin du serrage des pinces pour la fermeture du couvercle ;
- la figure 6 est une vue en coupe longitudinale selon la ligne 6-6 de la figure 5 ;
- la figure 7 est une vue en coupe transversale du module selon la ligne 7-7 de la figure 1 ;
- la figure 8 est une vue en coupe transversale du carter selon la ligne 8-8 de la figure 1 ;
- la figure 9 montre une vue en plan du couvercle.

Sur les figures, un boîtier 10 de logement de piles électriques 12 est composé de deux parties emboîtables comprenant un carter 14 creux obturé à étanchéité par un ensemble couvercle 16 et support 18 de piles.

L'organe ou le moyen de support 18 de piles est réalisé en matériau isolant moulé, et comporte différents compartiments 20, 22, 24, 26 juxtaposés séparés les uns des autres par des cloisons 28,30,32 planes intercalaires. Dans chaque compartiment 20,22,24,26 du support 18 peut être introduit une pile 12 de forme allongée et à section circulaire. Le support 18 est conformé en cartouche solidarisée par encliquetage au couvercle 16 de manière à former un module 19 extractible susceptible d'être introduit ou retiré du volume interne du carter 14.

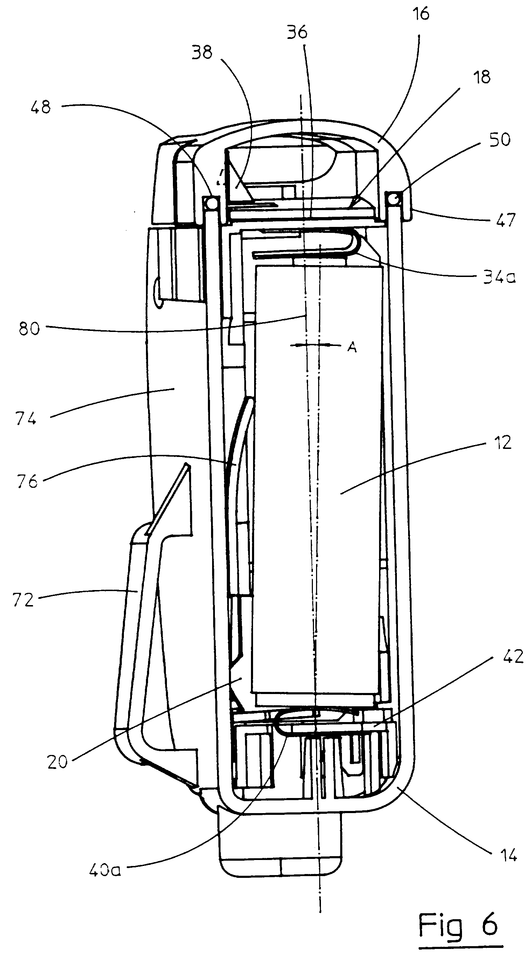

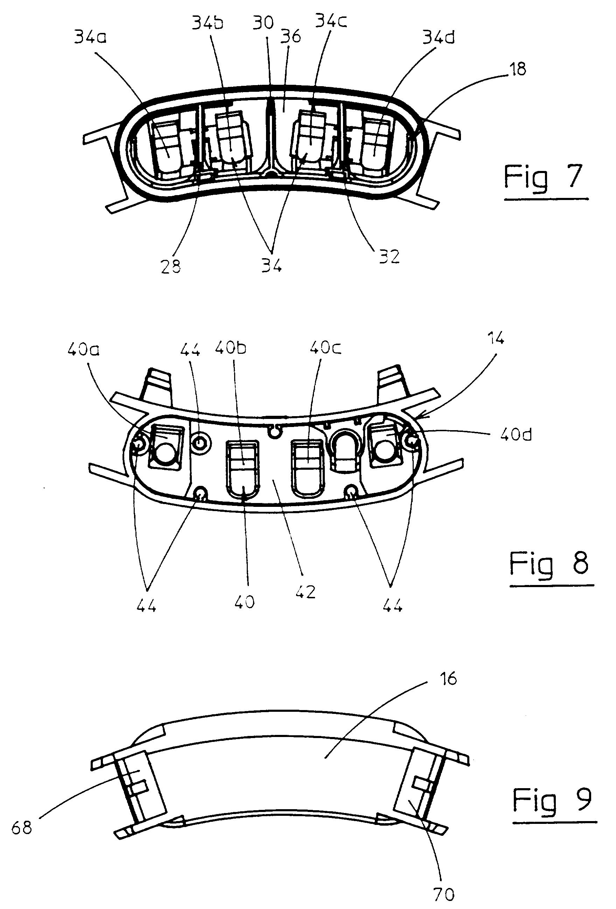

Un premier circuit de contacts 34 d'interconnexion est porté par la surface interne de la paroi supérieure 36 du support 18, et comprend deux paires de lamelles de contacts 34a,34b,34c,34d (voir figure 7). La surface extérieure de la paroi 36 est équipée d'ergots d'encliquetage 38 (dont l'un est visible sur la figure 6), susceptibles d'être clipsés dans des orifices conjugués du couvercle 16. A l'opposé du premier circuit de contacts 34, chaque compartiment 20, 22, 24, 26 possède un fond ouvert autorisant la venue en contact des pôles correspondants des piles 12 avec un deuxième circuit de contacts 40 d'interconnexion fixé dans le fond du carter 14.

Le deuxième circuit de contacts 40 comprend des lamelles de contacts 40a, 40b, 40c, 40d réparties sur une plaque 42 isolante, laquelle est insérée par le haut du carter 14 en étant positionnée au fond par des plots 44 de guidage et de maintien venant de moulage avec le carter 14 (figure 8). Le câble 46 d'alimentation du récepteur, par exemple une lampe d'éclairage, comporte deux conducteurs reliés électriquement aux lamelles de contact 40a et 40d du deuxième circuit de contact 40. Le câble 46 traverse à étanchéité un orifice 49 ménagé dans le fond du carter 14.

Le rebord 47 inférieur du couvercle 16 est pourvu d'une rainure 48 en U susceptible de coiffer le chant supérieur du carter 14 lors de la fermeture du boîtier 10. Un joint 50 torique est logé au fond de la rainure 48 pour assurer l'étanchéité au niveau de l'interface d'assemblage du couvercle 16 et du carter 14.

Sur les deux faces latérales 52, 54 étroites et opposées du carter 14 sont articulées deux pinces 56, 58 de serrage du couvercle 16 sur le carter 14. Les deux pinces 56, 58 sont identiques, et comportent chacune une surface d'accrochage 60 située à l'extrémité supérieure, un rebord de préhension 62 à l'extrémité inférieure, et une zone intermédiaire 64 d'articulation à une biellette 66, dont l'extrémité opposée est montée à basculement limité sur un axe solidaire de la face latérale 52, 54 correspondante du carter 14. Deux alvéoles 68, 70 (figure 9) sont agencés aux extrémités opposées du couvercle 16 pour recevoir les surfaces d'accrochage 60 des deux pinces 56, 58.

Le carter 14 comporte en plus des passants 72 agencés sur une grande face latérale 74 (figure 6) extérieure, et destinés à recevoir un organe d'attache, notamment une bande élastique d'une lampe d'éclairage à fixation frontale.

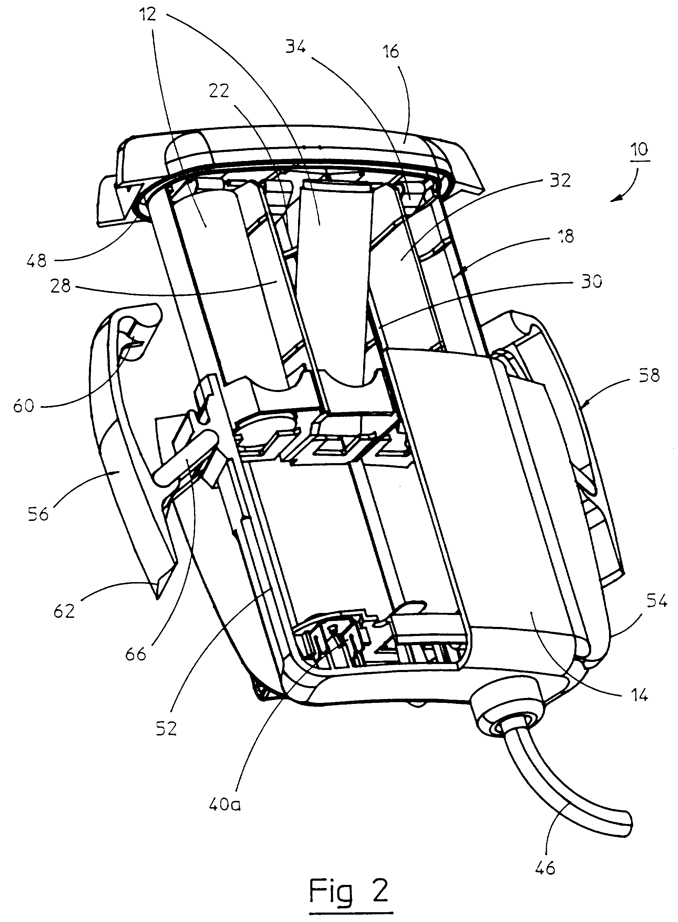

Le support 18 de piles est équipé au niveau de chaque compartiment 20, 22, 24, 26 d'une languette 76 élastique prenant appui sur la surface latérale cylindrique de la pile 12, pour solliciter cette dernière vers une position d'éjection (voir figure 2 au niveau du compartiment 22) au cours du retrait du support 18. La pression de ces languettes 76 facilite la préhension des piles 12 lors de leur remplacement.

La répartition électrique des lamelles de contacts des deux circuits 34, 40 assure la mise en série des piles 12 en position normale d'insertion dans les compartiments 20, 22, 24, 26 du support 18.

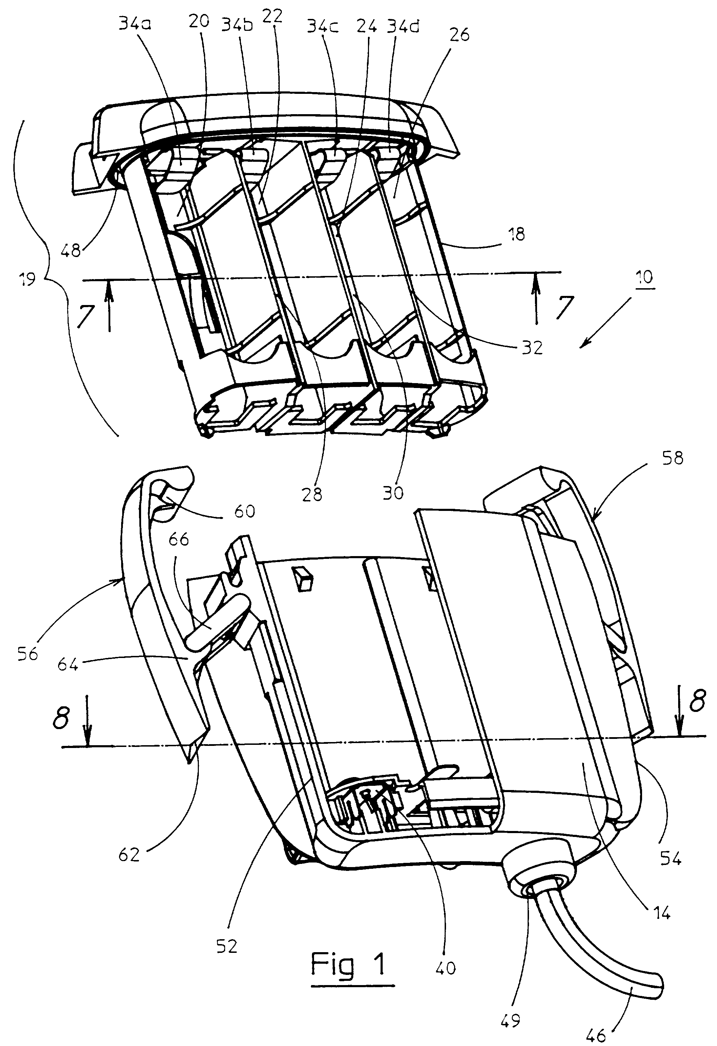

Les différentes étapes de montage des piles 12 dans le boîtier 10 sont illustrées sur les figures 1 à 5 :

Sur la figure 1, l'extraction totale du module 19 à couvercle 16 et à support 18 après la phase de déblocage des pinces 56, 58 permet la mise en place des piles 12 dans les compartiments 20, 22, 24, 26 respectifs du support 18. Les quatre piles 12 s'étendent parallèlement l'une à l'autre selon la direction longitudinale d'insertion du module 19 dans le carter 14.

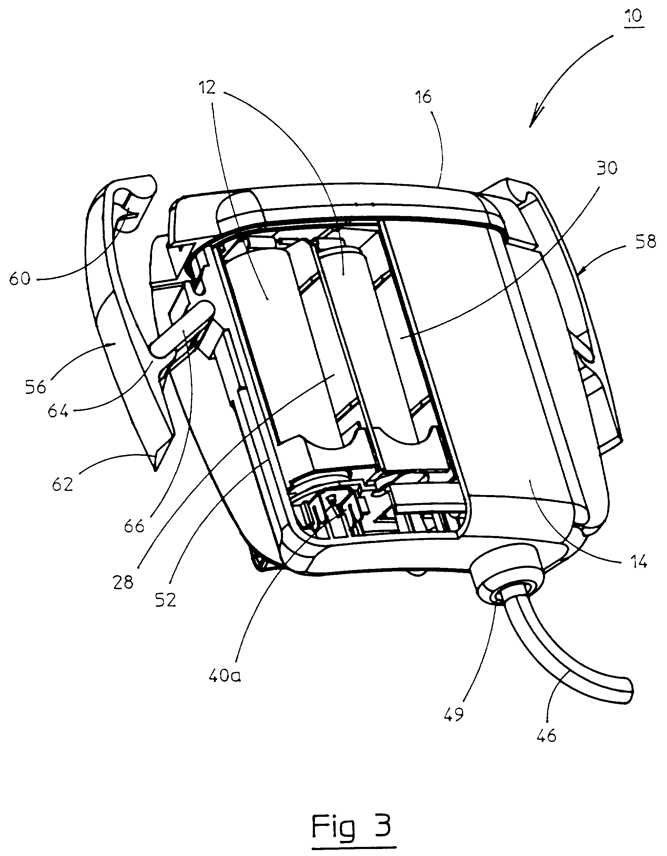

La figure 2 montre le début de la phase d'insertion du module 19 à l'intérieur du carter 14. Les quatre pôles inférieurs des piles 12 se rapprochent progressivement du deuxième circuit de contacts 40 au cours du mouvement de descente du module 19. L'insertion du module 19 dans le carter 14 est opéré soit par l'effet naturel de gravité en position verticale du carter 14, soit par une action de poussée sur le couvercle 16 lorsque le carter 14 se trouve dans une position différente. Les deux pinces 56, 58 restent inactives jusqu'à la fin de la course d'insertion du module 19 (figure 3), correspondant à la venue en engagement des piles 12 avec les lamelles de contact 40a, 40b, 40c, 40d du deuxième circuit 40 d'interconnexion.

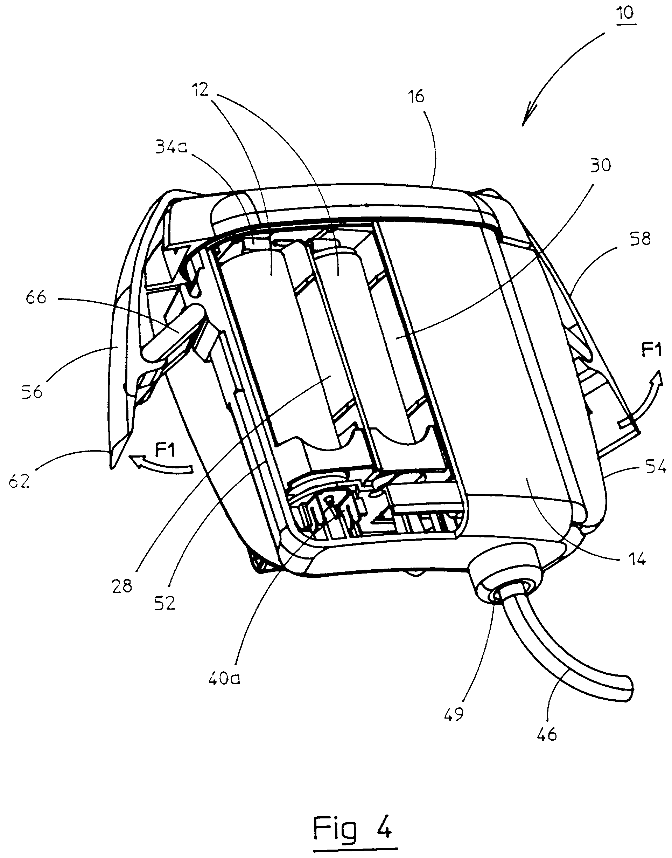

Il suffit ensuite de faire basculer les pinces 56, 58 vers l'extérieur dans le sens d'écartement des flèches F1 (figure 4) pour assurer un prémontage du boîtier 10. Les surfaces d'accrochage 60 des deux pinces 56, 58 sont engagées dans les alvéoles 68, 70 respectifs du couvercle 16, et empêchent tout mouvement de retrait du module 19. La pile 12 du premier compartiment 20 de gauche se trouve alors en contact avec les lamelles de contact 34a, 40a, celle du deuxième compartiment 22 avec les lamelles de contact 34b, 40b, celle du troisième compartiment 24 avec les lamelles de contact 34c, 40c, et celle du quatrième compartiment 26 de droite avec les lamelles de contact 34d, 40d.

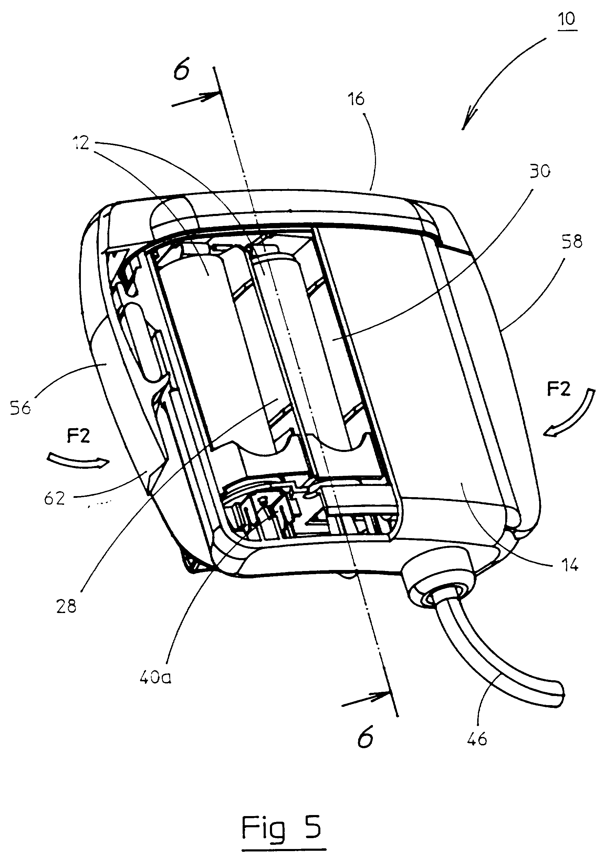

Sur la figure 5, le serrage définitif du couvercle 16 sur le carter 14 est dérivé d'un mouvement de basculement des pinces 56, 58 dans le sens de rapprochement des flèches F2, jusqu'à ce que les rebords de préhension 62 viennent en butée contre les deux faces latérales 52, 54 étroites du carter 14. Les forces symétriques de serrage des deux pinces 56, 58 provoque un mouvement de descente poursuivi du module 19 vers le fond du carter 14 pour engendrer à la fois une pression de contact répartie entre les piles 12 et les différentes lamelles de contact des circuits 34 et 40, et une étanchéité parfaite au niveau de l'interface d'assemblage du couvercle 16 sur le bord supérieur du carter 14. La surcourse du module 19 pendant le serrage des pinces 56, 58 correspond sensiblement à la compression des lamelles de contact 34a, 34b, 34c 34d; 40a, 40b, 40c, 40d, chaque lamelle étant recourbée en forme de U.

La figure 6 montre l'agencement d'une pile 12 dans le compartiment 20 dans l'état obturé du boîtier 10. Les deux lamelles de contact 34a et 40a sont comprimées au maximum pour obtenir un dédoublement de la pression de contact sur les deux pôles opposés de la pile 12. L'action élastique de la languette 76 sur la surface latérale de la pile 12 positionne cette dernière avec une légère inclinaison A par rapport à l'axe longitudinal 80 du compartiment 20 correspondant.

L'ouverture du boîtier 10 pour le remplacement des piles 12 s'effectue en sens inverse du montage, en passant par les phases des figures 5 à 1. Après le déblocage des pinces 56, 58, et le passage des surfaces d'accrochage 60 vers la position inactive (figure 3), le module 19 peut être retiré du carter 14 pour assurer l'accès aux piles 12. En fin de course de retrait (figure 2), les piles 12 sortent automatiquement de leurs compartiment 20,22,24,26 respectifs par l'action d'éjection des languettes 76 élastiques.

Sur le figure 1, le module 19 est retiré en totalité du carter 14 pour le remplacement des piles 12.

Selon une variante (non représentée), une butée de limitation de la course de déplacement du module 19 peut être agencée sur le carter 14 de manière à stopper le module 19 dans la position de la figure 2. Le module 19 est monté imperdable, mais facilite néanmoins le remplacement des piles 12 dans la position de fin de course de retrait.

Il est clair que les piles 12 peuvent être remplacées par des accumulateurs, ou toutes autres sources de tension. Dans cette variante (non représentée), il est également possible de supprimer l'organe support, après avoir solidariser mécaniquement entre eux les différents accumulateurs pour former un ensemble monobloc fixé au couvercle 16. Le module 19 extractible est alors formé par le couvercle 16 et l'ensemble monobloc des accumulateurs. Les lamelles de contacts 34a, 34b; 34c, 34d sont supprimés, la liaison électrique entre les différents accumulateurs étant réalisée par soudage de barrettes de connexion.

Le boîtier 10 est avantageusement réalisé par moulage d'un matériau plastique.

## Revendications

1. Boîtier pour le logement d'éléments électriques d'une source de tension d'alimentation, notamment des piles ou des accumulateurs, et comprenant un carter (14) creux renfermant un moyen de support (18) des éléments électriques, un couvercle (16) d'obturation du carter (14), et un circuit électrique d'interconnexion à un câble (46) traversant un orifice (49) du carter (14) pour l'alimentation d'un récepteur extérieur,
caractérisé en ce que :
- un moyen de support (18) des éléments électriques est rendu solidaire du couvercle (16) pour former un module (19) en forme de cartouche extractible,
- un premier circuit de contacts (34) relie entre eux les éléments électriques au voisinage du couvercle (16),
- un deuxième circuit de contacts (40) est disposé en regard du premier circuit (34) au fond du carter (14),
- et des moyens de serrage 11 du couvercle (16) sur le carter (14) comportent une paire de pinces, (56,58), articulées de manière symétrique sur les faces latérales opposées (52,54) du carter (14), chaque pince (56,58) comprenant une surface d'accrochage (60) susceptible de coopérer avec un organe de retenue (68,70) disposé à chaque extrémité du couvercle (16) de manière à engendrer à la fois une répartition uniforme de la pression de contact sur la totalité des éléments électriques, notamment des piles (12), et une étanchéité au niveau de l'interface d'assemblage du couvercle (16) et du bord supérieur du carter (14).

2. Boîtier selon la revendication 1, caractérisé en ce que le moyen de support (18) amovible comprend des compartiments (20,22,24,26) adjacents de positionnement et de maintien des piles (12), que le premier circuit de contacts (34) est porté par la surface interne de la paroi supérieure (36) du moyen de support (18) en s'étendant transversalement entre les compartiments (20,22,24,26), et que la surface extérieure de ladite paroi est équipée de moyens d'encliquetage (38) susceptibles d'être clipsés dans des orifices conjugués du couvercle (16) pour constituer ledit module (19).

3. Boîtier selon la revendication 1 ou 2, caractérisé en ce que le rebord (47) inférieur est doté d'une rainure (48) en U susceptible de coiffer le chant supérieur du carter 14 avec interposition d'un joint (50) d'étanchéité.

4. Boîtier selon la revendication 1 ou 2, caractérisé en ce que chaque pince (56,58) est pourvue d'un élément de préhension (62) situé à l'opposé de la surface d'accrochage (60), et d'une zone intermédiaire (64) d'articulation à une biellette (66) montée à basculement limité sur un axe porté par la face latérale (52,54) correspondante du carter (14).

5. Boîtier selon la revendication 2, caractérisé en ce que chaque compartiment (20,22,24,26) du moyen de support (18) comporte une languette (76) élastique venant en appui avec la surface latérale de la pile (12), ladite languette étant agencée pour positionner la pile (12) avec une légère inclinaison A par rapport à l'axe longitudinal (80) du compartiment correspondant de manière à favoriser l'éjection de la pile (12) lors du retrait du module (19).

6. Boîtier selon l'une des revendications 1 à 5, caractérisé en ce que le carter (14) comporte une butée de limitation de la course de déplacement du module (19) pour rendre ce dernier imperdable.

7. Boîtier selon l'une des revendications 1 ou 2, caractérisé en ce que le deuxième circuit de contacts (40) comporte des lamelles de contact (40a,40b,40c,40d) élastiques, réparties sur une plaque (42) isolante positionnée par des plots (44) de guidage sur le fond du carter (14).

8. Boîtier selon la revendication 1, utilisant des accumulateurs électriques, caractérisé en ce que les accumulateurs sont solidarisés mécaniquement entre eux pour former un ensemble monobloc fixé directement au couvercle (16), la liaison électrique des accumulateurs étant réalisée par soudage de barrettes de connexion.

## Patentansprüche

1. Behälter für die Unterbringung von elektrischen Elementen einer Speisespannungs-Quelle, insbesondere für Batterien oder Akkumulatoren, mit einem hohlen Gehäuse (14), in dem ein Trägermittel (18) der elektrischen Elemente, ein Verschlussdeckel (16) des Gehäuses (14), und ein elektrischer Verbindungs-Kreis mit einem Kabel (46), das eine Öffnung (49) des Gehäuses (14) zur Speisung eines äusseren Empfängers durchquert, enthalten sind,
dadurch gekennzeichnet, dass ;
- ein Trägermittel (18) der elektrischen Elemente mit dem Deckel (16) fest verbunden ist, um ein Modul (19) in Form einer herausnehmbaren Kartusche zu bilden,
- ein erster Kontaktkreis (34) die elektrischen Elemente in der Nähe des Deckels (16) miteinander verbindet,
- ein zweiter Kontaktkreis (40) gegenüber dem ersten Kreis (34) auf dem Boden des Gehäuse (14) angeordnet ist,
- Klemmmittel (11) des Deckels (16) auf dem Gehäuse (14) ein Paar Zangen (56, 58) aufweisen, die auf symmetrische Weise auf den gegenüberliegenden Seitenflächen (52, 54) des Gehäuses (14) gelenkig angeordnet sind, wobei jede Zange (56, 58) eine Aufhängfläche (60) aufweist, die mit einem an jedem Ende des Deckels (16) angeordneten Rückhalt-Element (68, 70) zusammenarbeiten kann, um gleichzeitig eine gleichmässige Verteilung des Kontaktdruckes auf die gesamten elektrischen Elemente, insbesondere auf Batterien (12), und eine Abdichtung auf der Höhe der Verbindungs-Zwischenfläche des Deckels (16) und des oberen Randes des Gehäuses (14) zu erzeugen.

2. Behälter gemäss Anspruch 1, dadurch gekennzeichnet, dass das abnehmbare Trägermittel (18) nebeneinanderliegende Fächer (20, 22, 24, 26) aufweist, zur Positionierung und Halten der Batterien (12), dass der erste Kontaktkreis (34) von der inneren Oberfläche der oberen Wand (36) des Trägermittels (18) getragen wird und sich dabei senkrecht zwischen den Fächern (20, 22, 24, 26) erstreckt, und dass die äussere Oberfläche der genannten Wand mit Einrastmitteln (38) ausgerüstet ist, die in zugeordnete Öffnungen des Deckels (16) einrasten können, um das genannte Modul (19) zu bilden.

3. Behälter nach Anspruch 1 oder 2, dadurch gekennzeichnet, dass der untere umgebogene Rand (47) mit einer U-förmigen Rille (48) versehen ist, die die obere Schmalseite des Gehäuses (14) mit Zwischenfügung eines Dichtungsringes (50) bedecken kann.

4. Behälter nach Anspruch 1 oder 2, dadurch gekennzeichnet, dass jede Zange (56, 58) mit einem gegenüber der Aufhängfläche (60) gelegenen Greif-Element (62) versehen ist und mit einer Zwischenzone (64) zur gelenkigen Verbindung mit einer Stange (66), die mit beschränkter Schwenkung auf einer Achse montiert ist, die von der entsprechenden Seitenfläche (52, 54) des Gehäuses (14) getragen wird.

5. Behälter gemäss Anspruch 2, dadurch gekennzeichnet, dass jedes Fach (20, 22, 24, 26) des Trägermittels (18) eine elastische Zunge (76) aufweist, die mit der seitlichen Oberfläche der Batterie (12) in Auflage kommt, wobei die genannte Zunge so ausgeführt ist, um die Batterie (12) mit einer leichten Neigung A gegenüber der Längsachse (80) des entsprechenden Fachs zu positionieren, um das Ausstossen der Batterie (12) beim Herausziehen des Moduls (19) zu begünstigen.

6. Behälter gemäss einem der Ansprüche 1 bis 5, dadurch gekennzeichnet, dass das Gehäuse (14) einen Anschlag zur Begrenzung der Bewegungsstrecke des Moduls (19) aufweist, um letzteres unverlierbar zu machen.

7. Behälter gemäss einem der Ansprüche 1 oder 2, dadurch gekennzeichnet, dass der zweite Kontaktkreis (40) elastische Kontaktlamellen (40a, 40b, 40c, 40d) aufweist, die auf einer Isolierplatte (42) verteilt sind, die durch Führungsklötze (44) auf dem Boden des Gehäuses (14) positioniert ist.

8. Behälter gemäss Anspruch 1, elektrische Akkumulatoren benutzend, dadurch gekennzeichnet, dass die Akkumulatoren mechanisch miteinander verbunden sind, um einen einteiligen Gesamtblock zu bilden, der direkt am Deckel (16) befestigt ist, wobei die elektrische Verbindung der Akkumulatoren durch Schweissen von Verbindungsstäben ausgeführt ist.

## Claims

1. A case for housing electrical elements of a voltage supply source, notably batteries or accumulator cells, and comprising a hollow casing (14) containing a means (18) for supporting the electrical elements, a cover (16) sealing the casing (14), and an electrical interconnection circuit with a cable (46) passing through an orifice (49) of the casing (14) for supply of an external receiver,
characterized in that :
- a means (18) for supporting the electrical elements is secured to the cover (16) to form a module (19) in the form of an extractable cartridge,
- a first contact circuit (34) connects the electrical elements to one another in the vicinity of the cover (16),
- a second contact circuit (40) is arranged facing the first circuit (34) at the bottom of the casing (14),
- and means (11) for securing the cover (16) on the casing (14) comprise a pair of grips (56, 58), articulated symmetrically on the opposite side faces (52, 54) of the casing (14), each grip (56, 58) comprising a latching surface (60) designed to cooperate with a retaining part (68, 70) located at each end of the cover (16) so as to generate both a uniform contact pressure distribution over all the electrical elements, notably the batteries (12), and a tightness at the level of the assembly interface of the cover (16) and top edge of the casing (14).

2. The case according to claim 1, characterized in that the removable support means (18) comprises adjacent compartments (20, 22, 24, 26) for positioning and securing the batteries (12), that the first contact circuit (34) is supported by the internal surface of the upper wall (36) of the support means (18) and extends transversely between the compartments (20, 22, 24, 26), and that the external surface of said wall is equipped with clipping means (38) designed to be clipped into conjugate orifices of the cover (16) to form said module (19).

3. The case according to claim 1 or 2, characterized in that the bottom edge (47) is provided with a U-shaped groove (48) designed to cover the upper edge of the casing (14) with interposition of a seal (50).

4. The case according to claim 1 or 2, characterized in that each grip (56, 58) is equipped with a gripping part (62) located opposite the latching surface (60), and an intermediate articulation zone (64) on a rod (66) mounted with limited rocking on a spindle borne by the corresponding side face (52, 54) of the casing (14).

5. The case according to claim 2, characterized in that each compartment (20, 22, 24, 26) of the support means (18) comprises a flexible tab (76) coming up against the lateral surface of the battery (12), said tab being arranged to position the battery (12) with a slight incline A with respect to the longitudinal axis (80) of the compartment so as to enhance ejection of the battery (12) when the module (19) is withdrawn.

6. The case according to one of the claims 1 to 5, characterized in that the casing (14) comprises a stop limiting the travel of the module 1(9 )to make the latter captive.

7. The case according to either of the claims 1 or 2, characterized in that the second contact circuit (40) comprises flexible contact strips (40a, 40b, 40c, 40d) arranged on an insulating plate (42) positioned by guiding studs (44) on the bottom of the casing (14).

8. The case according to claim 1, using electrical accumulator cells, wherein characterized in that the accumulator cells are mechanically secured to one another to form a monoblock assembly fixed directly to the cover (16), electrical connection of the accumulator cells being achieved by welding of connecting strips.
